# EUROPEAN PATENT SPECIFICATION

(11) **EP 2 796 329 B1**
(45) Date of publication and mention of the grant of the patent: **21.02.2018**
(21) Application number: 14163257.0
(22) Date of filing: 02.04.2014
(51) Int. Cl.: B60R 25/10

(54) **PROXIMITY DETECTION APPARATUS FOR CARGO VEHICLE**
NÄHERUNGSERKENNUNGSVORRICHTUNG FÜR EIN TRANSPORTFAHRZEUG
APPAREIL DE DÉTECTION DE PROXIMITÉ POUR VÉHICULE DE TRANSPORT DE CARGAISON

(30) Priority: 23.04.2013 NL 2010694
(43) Date of publication of application: 29.10.2014
(73) Proprietor: Cure Dubois B.V., 3311 JD Dordrecht (NL)
(72) Inventor: Dubois, Marcel Cornelius, 4814 TL Breda (NL)
(74) Representative: Patentwerk B.V.

(56) References cited:
- EP-A2- 1 298 007
- DE-A1-102005 018 487
- US-A1- 2008 238 636
- US-B1- 6 259 475

## Description

The present invention relates to a detection apparatus configured for placing on a cargo vehicle and comprising a control unit, indicator means for connecting to the control unit and a number of detectors for arranging on the cargo vehicle and for connecting to the control unit for the purpose of detecting the presence of bodies in a surveillance zone adjoining the cargo vehicle and comprising the cargo vehicle, wherein the detection apparatus is configured to detect the presence of bodies in the surveillance zone, at least when the cargo vehicle is not participating in traffic, wherein at least a number of the detectors are placed in a housing in which a light source is also placed.

Such an apparatus is known from US-A-2008/0 238 636. The apparatus known from this document reduces the chance of theft from or of the cargo vehicle by generating a warning when persons are present in the vicinity of a stationary cargo vehicle. The phrase 'not participating in traffic' is understood to mean the situation where the engine is switched off or is only being used for secondary functions such as generating current or powering a cooling machine. Combining the function of the detector with that of a lighting assembly such as is already present in cargo vehicles in the form of headlights, rear lights and contour lights, already achieves a considerable saving since fewer components need be mounted.

The aim of the invention is to further reduce the investment of installing an apparatus according to the invention in a vehicle.

This aim is reached in that that these detectors are connected to the control unit by means of power supply cables for the light source, that the detectors are each connected to the power supply cable by means of a modem, that the control unit is connected to the power supply cable by means of a modem and that the detectors are of different nature.

The use of the cables necessary for the power supply to the light sources achieves a further decrease in labour since hardly any new cables need be installed. These arguments apply for cargo vehicles which are provided with such an apparatus when they are supplied new as well as for cargo vehicles retrofitted with such an apparatus.

The small dimensions of the currently available detectors make it possible to accommodate these components, together with the associated electronics, in small housings. Trucks are usually provided with contour lighting and rear lights in the form of a number of housings provided with a light source which are arranged along the sides of the truck and have a yellow, orange or red transparent reflective cover. Such housings are often still quite large since they are dimensioned for the purpose of enclosing a light bulb with associated generation of heat. Replacing the light bulbs with LEDs makes space available in these housings which can be used for the detector. This embodiment also has the advantage that the presence of the radar detectors is not immediately visible.

In order to enable communication over the power supply cables the detectors are each connected to the power supply cable by means of a modem and the control unit is connected to the power supply cable by means of a modem. The modems can operate here in both directions. A modem is otherwise also understood here to mean other circuits which make it possible to combine a signal representing information with and later separate it from a supply voltage and current.

Application of semiconductor technology is making radar transmitters and receivers increasingly smaller and cheaper. It is therefore attractive for at least a number of the detectors, each placed in a housing, to comprise radar detectors provided with a transmitter for transmitting and a receiver for receiving electromagnetic radiation of a type reflected by bodies within the surveillance zone.

An important application is the detection of persons approaching the cargo vehicle. An embodiment provides for this purpose the measure that the detection apparatus is adapted to detect persons in the surveillance zone.

According to another preferred embodiment, the cargo space of the cargo vehicle forms part of the surveillance zone in order to also allow detection of persons once they are present in the cargo space of the vehicle.

It is not possible to preclude the cargo vehicle being approached by persons or vehicles which are not detected by detectors of a determined type. Therefore, the detectors are provided with detectors of differing nature so that as many methods of approach as possible are detected. Types of detectors preferably applied include light-sensitive detectors, with which flashlights and other light sources can be detected in the dark, microphones, with which approaching persons and noises occurring during a break-in can be detected, such as the sound of sliding boxes or canvas being cut, and detectors sensitive to IR radiation for detecting the heat generated by persons. Other types of detector are usually particularly suitable for surveillance of the interior of the cargo vehicle, i.e. on the one hand for detecting break-ins in the cargo space or the cab of the cargo vehicle and on the other for preventing false alarms.

In order to nevertheless provide sufficient protection in situations where the detectors have not detected the approach of a body into the vicinity of the vehicle, the apparatus is provided according to a preferred embodiment with detectors of the first type for detecting the presence of bodies in a first part of the surveillance zone directly adjoining the cargo vehicle and with detectors of the second type for detecting bodies in a second part of the surveillance zone located further away from the cargo vehicle.
According to another preferred embodiment, the control unit is adapted to generate a warning signal when, after the presence of a person has been detected, the person is later found to be still present in the surveillance zone.
The above described measures apply to stationary cargo vehicles. The apparatus is for instance activated when the engine of the truck is switched off or when the driver switches the detection unit on. The detectors already present according to the invention in the relevant trucks can now also be used as detector for the purpose of preventing collisions and damage. This form of detection is already known per se. A specific embodiment provides for this purpose the measure that the control unit is adapted to generate a warning signal during traffic participation when a body is present in the surveillance zone, and that the indicator unit is adapted to generate a warning signal of another type. Since this warning signal indicates immediate danger, the warning signal is preferably presented in a manner with a higher attention value, such as an audible and/or visible signal or a signal in or in the vicinity of a mirror. It is noted here as an aside that theft also occurs during travel; in order to also prevent such events it is important that the detectors also function during travel.

The detection apparatus is preferably adapted for placing in a truck and the control unit is adapted for communication with the indicator unit placed in the cab.

As already elucidated above, the apparatus is preferably configured to generate a warning signal in the cab of the cargo vehicle for the purpose of warning the driver. It is however also possible, either as alternative or in addition, for the control unit to be adapted for wireless communication with an indicator unit placed outside the cargo vehicle. This indicator unit can be formed by a mobile telephone or a manned control room, which can for instance call the police. This latter embodiment is for instance important for applications in a container, a railway wagon or in other vehicles where a driver is not in the immediate vicinity.

The invention also relates to a cargo vehicle provided with a detection apparatus according to any of the foregoing claims. It is noted that passenger cars are precluded, so that the invention relates to cargo vehicles, recreational vehicles, buses including coaches, containers, and rail vehicles.

Metadata are preferably sent to a central database in order to store movement around the vehicle in a central database. These metadata can be analysed at a later stage for the purpose of cargo vehicle security and/or optimization of safety around the cargo vehicle.

As elucidated above, the invention relates not only to placing of the detectors along the side walls of the cargo vehicle but also on the rear and front sides thereof, and on all sides of the cab. Detectors are possibly also placed on the underside and upper side of the cargo spaces. It is otherwise also possible to make use of a detection apparatus for invasive actions taking place inside the cab or inside the cargo space, such as the presence of substances causing the driver to lose consciousness, or of glass breakage detectors.

The truck can have the configuration of a single unit, wherein the cab and the cargo space are mounted together on a frame, but can also have the configuration of a tractive part and one or more drawn parts. The tractive part can here be a tractor unit and the drawn part a semi-trailer, although it is also possible for the tractive part to be a truck and the drawn part to be a trailer. In such situations it is recommended that the apparatus comprises a first control unit placed in the tractive part and configured for communication with the indicator means, and that the apparatus comprises a second control unit placed in the drawn part and configured for communication with the first control unit and with detectors arranged in the drawn part. This does after all prevent the necessity for providing special cables between the tractor unit and the semi-trailer, which would make coupling and uncoupling of the two parts more difficult. The drawn part is preferably provided with a battery for power supply to the detectors, the control unit and the transmitter associated with the control unit.

In order to prevent the tractive part being attached to the wrong drawn part it is also recommended that at least the second control unit is provided with a unit which identifies the drawn part and that the first control unit is configured to display the identification of the drawn part. The indicator unit in the cab is preferably adapted here to display the identification of the drawn part so that the driver can check whether the tractive part is connected to the desired drawn part. It is also noted in this respect that it does occur that parked tractor units or trailers are stolen. The measure elucidated above cannot prevent this when the tractive part involved in the theft is not provided with an indicator device. It is still necessary for this purpose to make use of the measures elucidated above in this document, such as proximity detection and, more specifically for the above elucidated situation, of tilt or motion detectors which detect the attaching of the trailer or semi-trailer to the tractive part. The detection apparatus according to the invention is therefore preferably configured such that, only when the drawn part is attached to a 'known' tractive part, i.e. a tractive part provided with a control unit which can communicate with the control unit in the drawn part and which is provided with the correct identification, does the detection apparatus not respond. This embodiment can be further configured to keep up to date a planning system with which it is possible to verify which drawn vehicle has to be attached so that a per se known but, according to planning, not necessarily correct drawn vehicle is prevented from being attached.

The present invention is elucidated hereinbelow with reference to the accompanying drawings, in which:
Figure 1 is a schematic top view of a trailer truck provided with an apparatus according to the invention;
Figure 2 is a schematic top view of a tractive vehicle with semi-trailer provided with an apparatus according to the invention;
Figure 3 is a more detailed schematic view of an apparatus according to the invention; and
Figure 4 is a partly broken-away side view of a lighting assembly provided with a detector according to the invention.

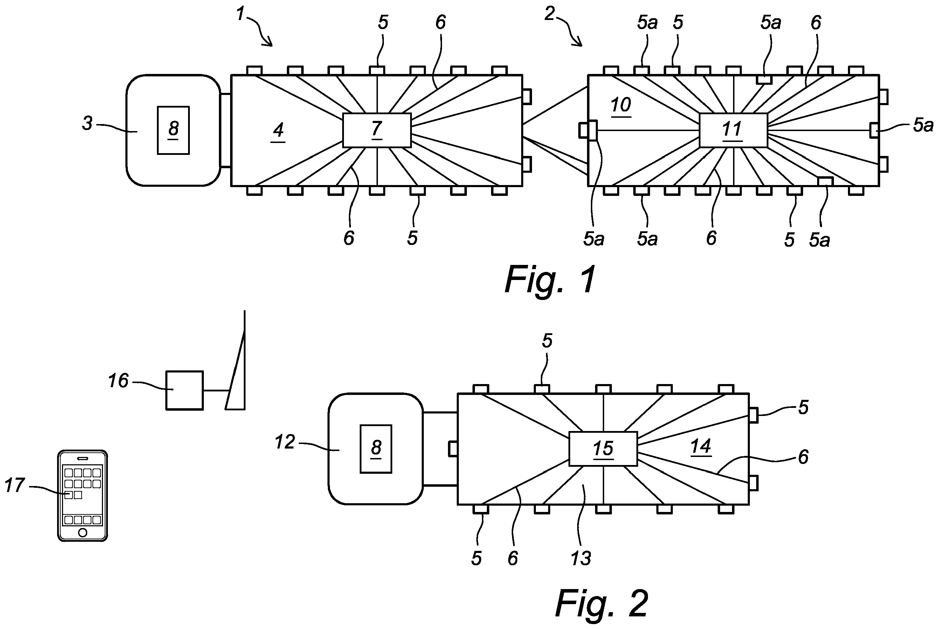

Figure 1 shows a trailer truck formed by a truck 1 and a trailer 2 coupled thereto. Of the truck 1 only cab 3 and loading space 4 are shown. A number of the presence detectors 5 are arranged on the periphery of cargo space 4. Detectors 5 are connected by means of galvanic connections in the form of cables 6 to a control unit 7 which is arranged on or in cargo space 4. Control unit 7 is configured for wireless communication with a signalling unit 8 placed in cab 3.

Cargo space 10 of trailer 2 is provided, just as cargo space 4, with a number of presence detectors 5 connected by means of cables 6 to a control unit 11 arranged on or in cargo space 10. It is noted here that a number of detectors 5a, which are each also connected to control unit 11, are likewise arranged in the interior of the cargo space of the trailer. The interior of the cargo space is hereby also monitored. Although not shown in the drawing, it is possible for cargo space 4 of the truck to also be provided with detectors for monitoring the cargo space. Control unit 11 is configured for wireless communication with the signalling unit 8 placed in cab 3. It is however also possible for control unit 11 of trailer 9 to be configured for wireless communication with control unit 7 of the truck itself. The approach of bodies such as persons, vehicles or tools is visualized in cab 3 by means of this configuration so that the driver present in the cab can take action to prevent the possibly imminent theft.

The embodiment shown in figure 2 comprises a tractor unit 12 coupled to a semi-trailer 13. Tractor unit 12 is provided with a cab 3 and semi-trailer 13 with a cargo space 14. Just as in the embodiment shown in figure 1 a signalling unit 8 is placed in the cab, and in or on cargo space 14 is arranged a control unit 15 which is connected by means of cables 6 to presence detectors 5 arranged along the edges of cargo space 14. Control unit 15 is configured for wireless communication with signalling unit 8 in the cab. Up to this point this second embodiment corresponds to the embodiment elucidated in figure 1. The second embodiment is however configured for wireless communication with a receiver placed outside the vehicle, such as an exchange 16 of a mobile telephone network, which transmits the warning to a mobile phone 17. Control unit 15 can be configured for this purpose for wireless communication with the receiver 16 placed outside the vehicle, although it is likewise possible for the actual signalling unit 8 placed in the cab to be configured for this purpose. A warning can in both cases be given via both the receiver 16 placed outside the vehicle and the signalling unit 8 in cab 3. In some situations it may be attractive to dispense with the signalling unit in the cab, for instance in the case of vehicles without such a cab, such as a container or a freight wagon for rail transport. It is noted that the various measures of the above elucidated embodiments can be combined with each other; it is thus possible for instance to attach trailer 2 behind semi-trailer 13.

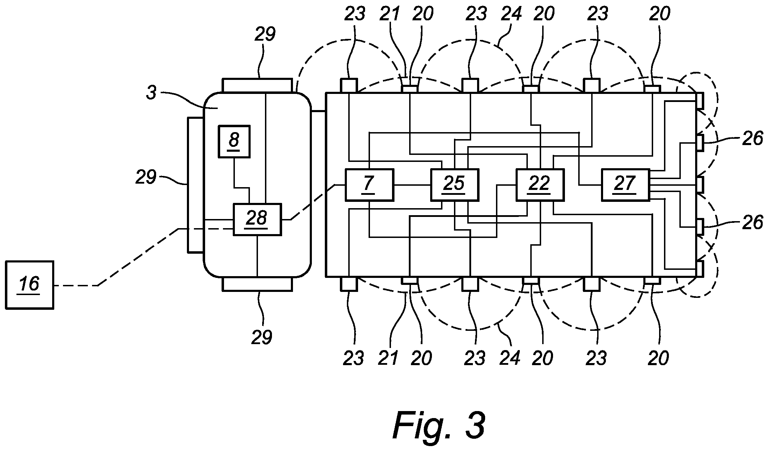

Figure 3 once again shows a truck provided with a cab 3, a cargo space 4, a signalling unit 8 placed in cab 3 and a control unit 7 connected to cargo space 4. The cargo space is provided with a number of presence detectors 20 of the first type which are configured to detect the presence of bodies in the immediate vicinity of cargo space 4 or in the cargo space. The area in which detectors 20 are effective is shown with broken lines 21. All detectors 20 of the first type are connected to a first central unit 22. The cargo space is also provided with a number of presence detectors 23 of the second type which are configured to detect the presence of bodies in an area located further away from cargo space 4. The area in which detectors 23 are effective is shown with broken lines 24. All detectors 23 of the second type are connected to a second central unit 25. The cargo space is also provided on the rear side with a series of presence detectors 26 of a third type, which are all connected to a third central unit 27. The first, the second and the third central unit 22, 25 and 27 are all connected to control unit 7 which is configured to process the information coming from central units 22, 25, 27 and to pass on the results of this processing, preferably wirelessly, to a control unit 28 placed in cab 3. This latter control unit passes on the results to the signalling unit 8 placed in the cab or to the receiver placed outside the vehicle. In this embodiment cab 3 is likewise provided with a number of presence detectors 29 which are connected to control unit 28 in cab 3. Depending on the configuration, the different units can be joined together to form combined units with the same functionality. The connections between the detectors and the associated central units need not be formed by specific wires or cables, but can also be formed by wires which are already present and over which the signals are transmitted in modulated form. In this embodiment the control unit is configured for wireless can medication with a receiving unit located outside the apparatus.

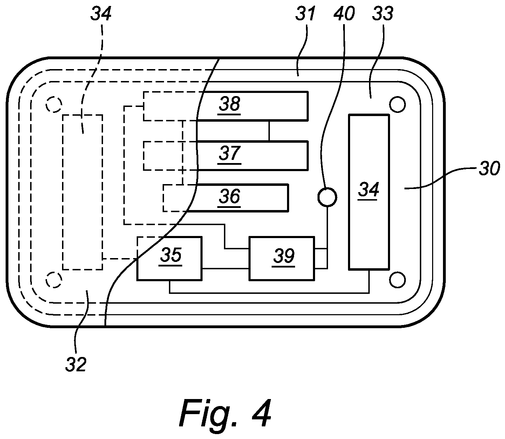

Figure 4 shows an assembly 30 for a combination of contour lighting and radar signalling. Assembly 30 comprises a rear plate 31 which is manufactured from plastic and on which a coloured transparent cover plate 32 is mounted in non-releasable and water-tight manner. The drawing shows only a broken-away part of cover plate 32. Placed on rear plate 31 is a printed circuit board 33 on which the diverse components are arranged. For mutual connection of the components placed on the printed circuit board, the printed circuit board is provided in the usual manner with conductive tracks (not shown). One or two LED light sources 34 are placed on printed circuit board 33, as are a power supply unit 35 for the two LED light sources. A radar transmitter 36 and a radar receiver 37 are also placed on printed circuit board 33, together with a radar control unit 38. The circuit likewise comprises a modem 39 for communication with the relevant central unit. Modem 39 is connected on the one hand to a power supply cable 40 and on the other to power supply unit 35 and to radar control unit 38. Use is preferably made for this assembly of an already existing assembly which is mounted on the vehicle and used in the given situation for contour lighting with a light bulb; application of small light sources such as LEDs which generate less heat makes space available for the components of the radar detector. Power supply cable 40 fulfils its actual function here, i.e. power supply to the light sources and the other components, but also serves as conductor for the information signals between the detector and the control unit. An RF receiver and transmitter with a modular antenna is preferably added for communication with the cab.

The measures of diverse embodiments can be combined with each other.

## Claims

1. Detection apparatus adapted for placing on a cargo vehicle (1, 2; 12, 13) and comprising:
- a control unit (7, 11; 15; 22, 25, 27, 28);
- indicator means (8; 16; 17) for connecting to the control unit (7, 11; 15); and
- a number of detectors (5; 20, 23, 26) for arranging on the cargo vehicle (1, 2) and for connecting to the control unit (7, 11; 15; 25, 27, 28) for the purpose of detecting the presence of bodies in a surveillance zone (21, 24) adjoining the cargo vehicle and including the cargo vehicle, wherein the detection apparatus is adapted to detect the presence of bodies in the surveillance zone (21, 24), at least when the cargo vehicle (1, 2; 12, 13) is not participating in traffic, wherein at least a number of the detectors (5; 20, 23, 26) are placed in a housing (30) in which a light source (34) is also placed, **characterized in that** these detectors (5; 20, 23, 26) are connected to the control unit (7, 11; 15; 22, 25, 27) by means of power supply cables (6; 40) for the light source (34),
- that the detectors (5; 20, 23, 26) are each connected to the power supply cable (6; 40) by means of a modem (39);
- that the control unit (7) is connected to the power supply cable (6; 40) by means of a modem (39), and
- that the detectors (5; 20, 23, 26) are of different nature.

2. Detection apparatus as claimed in claim 1, **characterized in that** at least a number of the detectors (5; 20, 23, 26), each placed in a housing (30), comprise a radar transmitter (36) and a radar receiver (37).

3. Detection apparatus as claimed in claim 1 or 2, **characterized in that** the surveillance zone (21, 24) adjoins the cargo vehicle (1, 2).

4. Detection apparatus as claimed in any of the claims 1-3, **characterized in that** the surveillance zone (21, 24) extends over the cargo space (10) of the cargo vehicle (1, 2).

5. Detection apparatus as claimed in any of the preceding claims, **characterized in that** the apparatus is provided with detectors (20) of a first type for detecting the presence of bodies in a first part (21) of the surveillance zone directly adjoining the cargo vehicle (1, 2) and with detectors (23) of a second type for detecting bodies in a second part (24) of the surveillance zone located further away from the cargo vehicle.

6. Detection apparatus as claimed in any of the foregoing claims, **characterized in that** the control unit (7, 11; 15; 22, 25, 27) is adapted to generate a warning signal when, after the presence of a person has been detected, the person is later found to be still present in the surveillance zone.

7. Detection apparatus as claimed in any of the foregoing claims, **characterized in that** the control unit (7, 11; 15; 22, 25, 27) is adapted to generate a warning signal during traffic participation when a body is present in the surveillance zone, and that the indicator unit is configured to generate a warning signal with a higher attention value.

8. Detection apparatus as claimed in any of the foregoing claims, **characterized in that** the control unit (7) is adapted for wireless communication with a portable indicator unit (17).

9. Detection apparatus as claimed in any of the foregoing claims, **characterized in that** the control unit (7, 11; 15; 22, 25, 27) is adapted for communication with an indicator unit (8) placed in the cab (3) of the cargo vehicle (1, 2).

10. Cargo vehicle (1, 2) provided with a detection apparatus as claimed in any of the foregoing claims.

11. Cargo vehicle (1, 2) as claimed in claim 10, **characterized in that** the cargo vehicle comprises a tractive (1) and a drawn part (2), that the apparatus comprises a first control unit (7) placed in the tractive part and configured for communication with the indicator means (5, 16, 17), and that the apparatus comprises a second control unit (11) placed in the drawn part and configured for communication with the first control unit (7) and with detectors (5) arranged in the drawn part (2).

12. Cargo vehicle (1,2) as claimed in claim 11, **characterized in that** at least the second control unit (11) is provided with a unit which identifies the drawn part (2) and that the first control unit (7) is configured to display the identification of the drawn part (2).

## Patentansprüche

1. Zur Anordnung an einem Lastfahrzeug (1, 2; 12, 13) vorgesehene Erfassungsvorrichtung, die Folgendes enthält:
- eine Steuereinheit (7, 11; 15; 22, 25, 27, 28);
- Anzeigemittel (8; 16; 17) zur Verbindung mit der Steuereinheit (7, 11; 15); und
- mehrere Erfassungsglieder (5; 20, 23, 26) zur Anordnung am Lastfahrzeug (1, 2) und zur Verbindung mit der Steuereinheit (7, 11; 15; 25, 27, 28), die dafür vorgesehen sind, die Anwesenheit von Körpern in einer an das Lastfahrzeug angrenzenden und das Lastfahrzeug einschließenden Überwachungszone (21, 24) zu erfassen, wobei die Erfassungsvorrichtung dafür vorgesehen ist, die Anwesenheit von Körpern in der Überwachungszone (21, 24) zumindest dann zu erfassen, wenn das Lastfahrzeug (1, 2; 12, 13) nicht am Verkehr teilnimmt, wobei zumindest mehrere der Erfassungsglieder (5; 20, 23, 26) in einem Gehäuse (30) angeordnet sind, in welchem auch eine Lichtquelle (34) angeordnet ist,
**dadurch gekennzeichnet, dass** diese Erfassungsglieder (5; 20, 23, 26) mittels Stromversorgungskabeln (6; 40) für die Lichtquelle (34) mit der Steuereinheit (7, 11; 15; 22, 25, 27) verbunden sind,
- dass die Erfassungsglieder (5; 20, 23, 26) jeweils mittels eines Modems (39) mit dem Stromversorgungskabel (6; 40) verbunden sind,
- dass die Steuereinheit (7) mittels eines Modems (39) mit dem Stromversorgungskabel (6; 40) verbunden ist und
- dass die Erfassungsglieder (5; 20, 23, 26) unterschiedlicher Art sind.

2. Erfassungsvorrichtung nach Anspruch 1, **dadurch gekennzeichnet, dass** zumindest mehrere der Erfassungsglieder (5; 20, 23, 26), von denen jede in einem Gehäuse (30) platziert ist, einen Radarsender (36) und einen Radarempfänger (37) enthalten.

3. Erfassungsvorrichtung nach Anspruch 1 oder 2, **dadurch gekennzeichnet, dass** die Überwachungszone (21, 24) an das Lastfahrzeug (1, 2) angrenzt.

4. Erfassungsvorrichtung nach einem der Ansprüche 1 bis 3, **dadurch gekennzeichnet, dass** sich die Überwachungszone (21, 24) über den Lastraum (10) des Lastfahrzeugs (1, 2) erstreckt.

5. Erfassungsvorrichtung nach einem der vorhergehenden Ansprüche, **dadurch gekennzeichnet, dass** die Vorrichtung mit Erfassungsglieder (20) eines ersten Typs zum Erfassen der Anwesenheit von Körpern in einem unmittelbar an das Lastfahrzeug (1, 2) angrenzenden ersten Teil (21) der Überwachungszone und mit Erfassungsglieder (23) eines zweiten Typs zum Erfassen von Körpern in einem vom Lastfahrzeug weiter entfernt befindlichen zweiten Teil (24) der Überwachungszone versehen ist.

6. Erfassungsvorrichtung nach einem der vorhergehenden Ansprüche, **dadurch gekennzeichnet, dass** die Steuereinheit (7, 11; 15; 22, 25, 27) dafür eingerichtet ist, ein Warnsignal zu erzeugen, wenn nach Erfassung der Anwesenheit einer Person zu einem späteren Zeitpunkt festgestellt wird, dass sich die Person noch immer in der Überwachungszone befindet.

7. Erfassungsvorrichtung nach einem der vorhergehenden Ansprüche, **dadurch gekennzeichnet, dass** die Steuereinheit (7, 11; 15; 22, 25, 27) dafür eingerichtet ist, während der Teilnahme am Verkehr ein Warnsignal zu erzeugen, wenn sich ein Körper in der Überwachungszone befindet, und dass die Anzeigeeinheit dafür konfiguriert ist, ein Warnsignal mit einem höheren Aufmerksamkeitswert zu erzeugen.

8. Erfassungsvorrichtung nach einem der vorhergehenden Ansprüche, **dadurch gekennzeichnet, dass** die Steuereinheit (7) zur drahtlosen Kommunikation mit einer tragbaren Anzeigeeinheit (17) eingerichtet ist.

9. Erfassungsvorrichtung nach einem der vorhergehenden Ansprüche, **dadurch gekennzeichnet, dass** die Steuereinheit (7, 11; 15; 22, 25, 27) zur Kommunikation mit einer in der Kabine (3) des Lastfahrzeugs (1, 2) angeordnete Anzeigeeinheit (8) eingerichtet ist.

10. Mit einer Erfassungsvorrichtung nach einem der vorhergehenden Ansprüche versehenes Lastfahrzeug (1, 2).

11. Lastfahrzeug (1, 2) nach Anspruch 10, **dadurch gekennzeichnet, dass** das Lastfahrzeug einen Zugteil (1) und einen Anhängerteil (2) umfasst, dass die Vorrichtung eine erste Steuereinheit (7) umfasst, die im Zugteil platziert und zur Kommunikation mit den Anzeigemitteln (5, 16, 17) konfiguriert ist, und dass die Vorrichtung eine zweite Steuereinheit (11) umfasst, die im Anhängerteil platziert und zur Kommunikation mit der ersten Steuereinheit (7) und mit im Anhängerteil (2) angeordneten Erfassungsglieder (5) konfiguriert ist.

12. Lastfahrzeug (1, 2) nach Anspruch 11, **dadurch gekennzeichnet, dass** zumindest die zweite Steuereinheit (11) mit einer den Anhängerteil (2) identifizierenden Einheit versehen ist, und dass die erste Steuereinheit (7) dafür konfiguriert ist, die Identifizierung des Anhängerteils (2) anzuzeigen.

## Revendications

1. Appareil de détection adapté pour être placé sur un véhicule de transport de marchandises (1, 2 ; 12, 13) et comprenant :
- une unité de commande (7, 11 ; 15 ; 22, 25, 27, 28) ;
- des moyens indicateurs (8 ; 16 ; 17) prévus pour se connecter à l'unité de commande (7, 11 ; 15) ; et
- un certain nombre de détecteurs (5 ; 20, 23, 26) prévus pour être disposés sur le véhicule de transport de marchandises (1, 2) et pour se connecter à l'unité de commande (7, 11 ; 15 ; 25, 27, 28) dans le but de détecter la présence de corps dans une zone de surveillance (21, 24) adjacente au véhicule de transport de marchandises et comprenant le véhicule de transport de marchandises, dans lequel l'appareil de détection est conçu pour détecter la présence de corps dans la zone de surveillance (21, 24), au moins lorsque le véhicule de transport de marchandises (1, 2 ; 12, 13) ne participe pas au trafic, dans lequel au moins un certain nombre de détecteurs (5 ; 20, 23, 26) sont placés dans un boîtier (30) dans lequel on place également une source de lumière (34),
**caractérisé en ce que** ces détecteurs (5 ; 20, 23, 26) sont connectés à l'unité de commande (7, 11 ; 15 ; 22, 25, 27) par des câbles d'alimentation électrique (6 ; 40) pour la source de lumière (34),
- **en ce que** les détecteurs (5 ; 20, 23, 26) sont chacun connectés au câble d'alimentation électrique (6 ; 40) par un modem (39) ;
- **en ce que** l'unité de commande (7) est connectée au câble d'alimentation électrique (6 ; 40) par un modem (39), et
- **en ce que** les détecteurs (5 ; 20, 23, 26) sont d'une nature différente.

2. Appareil de détection selon la revendication 1, **caractérisé en ce qu'**au moins un certain nombre des détecteurs (5 ; 20, 23, 26), chacun placé dans un boîtier (30), comprennent un émetteur radar (36) et un récepteur radar (37).

3. Appareil de détection selon la revendication 1 ou 2, **caractérisé en ce que** la zone de surveillance (21, 24) est adjacente au véhicule de transport de marchandises (1, 2).

4. Appareil de détection selon l'une quelconque des revendications 1 à 3, **caractérisé en ce que** la zone de surveillance (21, 24) s'étend sur l'espace de marchandises (10) du véhicule de transport de marchandises (1, 2).

5. Appareil de détection selon l'une quelconque des revendications précédentes, **caractérisé en ce que** l'appareil est pourvu de détecteurs (20) d'un premier type pour détecter la présence de corps dans une première partie (21) de la zone de surveillance directement adjacente au véhicule de transport de marchandises (1, 2), et de détecteurs (23) d'un second type pour détecter des corps dans une seconde partie (24) de la zone de surveillance située plus loin du véhicule de transport de marchandises.

6. Appareil de détection selon l'une quelconque des revendications précédentes, **caractérisé en ce que** l'unité de commande (7, 11 ; 15 ; 22, 25, 27) est conçue pour générer un signal d'avertissement lorsque, après que la présence d'une personne ait été détectée, on trouve plus tard la personne encore présente dans la zone de surveillance.

7. Appareil de détection selon l'une quelconque des revendications précédentes, **caractérisé en ce que** l'unité de commande (7, 11 ; 15 ; 22, 25, 27) est conçue pour générer un signal d'avertissement pendant la participation au trafic lorsqu'un corps est présent dans la zone de surveillance, et **en ce que** l'unité d'indicateurs est conçue pour générer un signal d'avertissement ayant une valeur d'attention supérieure.

8. Appareil de détection selon l'une quelconque des revendications précédentes, **caractérisé en ce que** l'unité de commande (7) est conçue pour une communication sans fil avec une unité d'indicateurs portable (17).

9. Appareil de détection selon l'une quelconque des revendications précédentes, **caractérisé en ce que** l'unité de commande (7, 11 ; 15 ; 22, 25, 27) est conçue pour une communication avec une unité d'indicateurs (8) placée dans la cabine (3) du véhicule de transport de marchandises (1, 2).

10. Véhicule de transport de marchandises (1, 2) pourvu d'un appareil de détection selon l'une quelconque des revendications précédentes.

11. Véhicule de transport de marchandises (1, 2) selon la revendication 10, **caractérisé en ce que** le véhicule de transport de marchadisses comprend une partie de traction (1) et une partie tirée (2), **en ce que** l'appareil comprend une première unité de commande (7) placée dans la partie de traction et conçue pour une communication avec les moyens d'indicateurs (5, 16, 17), et **en ce que** l'appareil comprend une seconde unité de commande (11) placée dans la partie tirée et conçue pour une communication avec la première unité de commande (7) et avec des détecteurs (5) disposés dans la partie tirée (2).

12. Véhicule de transport de cargaison (1, 2) selon la revendication 11, **caractérisé en ce qu'**au moins la seconde unité de commande (11) est pourvue d'une unité qui identifie la partie tirée (2) et **en ce que** la première unité de commande (7) est conçue pour afficher l'identification de la partie tirée (2).
